# FASCICULE DE BREVET EUROPEEN

(11) **EP 1 425 251 B1**
(45) Date de publication et mention de la délivrance du brevet: **24.08.2005**
(21) Numéro de dépôt: 02764972.2
(22) Date de dépôt: 10.07.2002
(51) Int. Cl.: C03C 25/50, C08J 5/08

(54) **PROCEDE DE FABRICATION D'UN ELEMENT DE RENFORT LONGITUDINAL A BASE DE FIBRE DE VERRE, FIBRE AINSI OBTENUE, ET ARTICLE INCORPORANT UNE TELLE FIBRE**
VERFAHREN ZUR HERSTELLUNG EINES AUF GLASFASER BASIERTEN LÄNGSVERSTÄRKUNGSELEMENTS, DAMIT ERHALTENE FASER, UND SOLCH EINE FASER ENTHALTENDER GEGENSTAND
METHOD FOR MAKING A LONGITUDINAL REINFORCING ELEMENT BASED ON GLASS FIBERS, RESULTING FIBER, AND ARTICLE INCORPORATING SAME

(30) Priorité: 11.09.2001 FR 0111735
(43) Date de publication de la demande: 09.06.2004
(73) Titulaire: Sovoutri Société Voultaine de Transformes Industriels, 38300 Bourgoin Jallieu (FR)
(72) Inventeur: TONON, Corinne, F-26400 Crest (FR); CARITEY, Isabelle, F-38080 L'Isle d'Abeau (FR); HUTTER, Pierre-Alain, F-69100 Villeurbanne (FR)
(74) Mandataire: Vuillermoz, Bruno
(86) Numéro de dépôt international: PCT/FR2002/002430
(87) Numéro de publication internationale: WO 2003/022772

(56) Documents cités:
- EP-A- 0 722 914
- US-A- 5 236 982
- US-B1- 6 211 280

## Description

### Domaine technique

L'invention se rattache au domaine de l'industrie textile. Elle concerne plus précisément le secteur de la fabrication des éléments de renforcement destinés à être incorporés dans des articles profilés à base d'élastomère thermoplastique. Certains de ces articles sont utilisés dans l'industrie automobile, notamment pour former des joints d'étanchéité compressibles, par exemple au niveau des portières.

L'invention vise plus spécifiquement un procédé de traitement d'une fibre de verre qui permet l'utilisation de cette fibre en tant que renfort lors des opérations d'extrusion durant la fabrication de ces articles profilés.

### Techniques antérieures

Les articles profilés réalisés à base d'élastomères sont généralement extrudés dans une filière, à partir de l'élastomère chauffé. On emploie généralement les élastomères pour leurs qualités d'élasticité, qui sont appréciées dans le cas où l'article ainsi réalisé est soumis à de fréquentes compressions. C'est notamment le cas des joints de portières utilisés dans les véhicules automobiles.

Un problème se pose avec les articles profilés en élastomère qui sont extrudés. En effet, lorsque la matière se refroidit après extrusion, on observe des phénomènes de retrait de l'élastomère. Ce retrait peut s'effectuer sur plusieurs heures, voire sur plusieurs jours. Pendant cette durée, il est nécessaire de laisser les profilés sans contrainte, ce qui interdit donc leur utilisation. Autrement dit, la réalisation de ces profilés par extrusion oblige à une période de stockage minimum qui vient augmenter le prix de revient de tels articles.

Pour résoudre ce problème, on a déjà proposé de renforcer les profilés élastomériques avec des éléments de renforts longitudinaux. Ces renforts, typiquement réalisés en polyester ou en fibres de verre, ont subi un traitement d'adhérisage grâce auquel le matériau élastomèrique adhère fermement aux renforts. Les phénomènes de retrait sont ainsi bloqués par la présence de ces renforts sur lesquels vient s'immobiliser le matériau élastomérique en cours de refroidissement. L'utilisation de ces renforts permet également de faciliter les opérations d'extrusion, puisque la traction est exercée sur ces renforts, et non pas sur le matériau élastomérique proprement dit.

On a également proposé de réaliser des articles profilés qui présentent de meilleures aptitudes à la réalisation de formes complexes. En effet, lorsque les articles à réaliser ont une géométrie spécifique, il peut s'avérer intéressant de pouvoir les modeler en conséquence. C'est pourquoi on a proposé de réaliser ces articles en matériau élastomérique incorporant des composés thermoplastiques. De tels composés présentent l'avantage d'être facilement fusibles, ce qui facilite les opérations d'extrusion puis de conformation. Ils sont également plus résistants aux agressions et au temps.

Le problème se pose de l'incorporation d'éléments de renforts longitudinaux dans ces articles à base d'élastomères thermoplastiques. En effet, les renforts utilisés pour les articles profilés à base uniquement d'élastomères ne sont pas compatibles avec les élastomères thermoplastiques. On observe en effet une mauvaise adhérence du matériau élastomère thermoplastique sur les renforts existants.

Un objectif de l'invention est de permettre de réaliser des renforts longitudinaux qui présentent de bonnes caractéristiques d'adhérence vis-à-vis des élastomères thermoplastiques.

### Exposé de l'invention

L'invention concerne donc un procédé de fabrication d'un élément de renfort longitudinal à base de fibres de verre, destiné à être incorporé dans un article profilé à base d'élastomère thermoplastique.

Conformément à l'invention, ce procédé comporte au moins deux étapes successives, à savoir :
- une étape de pré-activation des fibres de verre, par trempage dans une solution contenant un mélange d'époxyde et de diisocyanate ;
- une étape d'extrusion d'un matériau thermoplastique, fonctionnalisé par un groupe réactif ayant une réactivité chimique avec les époxydes ou les diisocyanates sur les fibres pré-activées.

Autrement dit, les fibres sont tout d'abord traitées par une solution d'époxyde et de diisocyanate. Ces molécules présentent une bonne affinité avec le verre, et recouvre la fibre d'une couche qui est ensuite recouverte, par extrusion, d'un matériau thermoplastique. Ce matériau peut être un élastomère thermoplastique, ou un matériau uniquement thermoplastique. Lorsque ce renfort est ensuite mis en présence de l'élastomère thermoplastique de l'article renforcé, on observe une bonne adhésion de la fibre ainsi traitée par rapport à la masse du matériau thermoplastique élastomérique.

En pratique, le procédé peut comporter, postérieurement à l'étape de pré-activation, une étape de séchage des fibres pré-activées. Autrement dit, on réalise la première opération de trempage de la fibre dans une solution aqueuse d'époxyde et de diisocyanate, ou bien encore en milieu solvant. L'étape de séchage permet d'éliminer l'eau ou le solvant pour procéder à l'étape ultérieure d'extrusion.

Dans le cas où l'on procède à un trempage des fibres en milieu aqueux, on préférera que les diisocyanates utilisés soient des diisocyanates bloqués. Plus précisément, une des deux fonctions isocyanate des diisocyanates est débloquée lors de l'opération de pré-activation, ce qui lui permet de venir se greffer sur les fibres de verre, en association avec les groupements époxyde. L'autre fonction isocyanate, située du côté opposé à la fibre de verre sur le composant diisocyanate demeure bloquée, ce qui permet son utilisation en milieu aqueux.

Ainsi, dans ce cas, le procédé peut comporter, préalablement à l'étape d'extrusion, une étape de déblocage des diisocyanates présents sur les fibres pré-activées.

Ce déblocage peut avoir lieu soit à la fin de l'étape de séchage, soit juste avant l'étape d'extrusion. Dans le second cas, cela permet de réaliser l'opération d'extrusion de façon séparée, dans le temps et/ou dans l'espace, vis-à-vis de l'opération de pré-activation.

En pratique, on a constaté qu'on obtient de bons résultats, en utilisant comme matériau pour l'étape d'extrusion, un matériau thermoplastique fonctionnalisé par des groupes anhydrides maléiques.

Le procédé décrit ci-avant permet d'obtenir des renforts en fibres de verre qui peuvent être incorporés dans de très nombreux articles profilés à base d'élastomères thermoplastiques, et notamment des joints d'étanchéité utilisés dans les portières de véhicules automobiles.

### Manières de réaliser l'invention

Pour évaluer les qualités des différents renforts élaborés conformément au procédé, des essais ont été menés avec différentes solutions de pré-traitement, et avec plusieurs matériaux élastomères thermoplastiques d'extrusion du renfort. Certains renforts, employant la même solution de pré-activation et le même matériau d'extrusion ont été réalisés dans différentes conditions opératoires.

Les fibres de verre utilisées pour ces essais sont des fibres commercialisées par la société VETROTEX sous la référence EC13 T6. Ces fibres possèdent un titre de 136 tex, et une torsion dans le sens Z de 20 tours. Le renfort est obtenu par câblage de deux bouts d'un tel fil, traités en parallèle.

### 1/ Etape de pré-activation

Trois solutions de pré-activation ont été utilisées, comme définies ci-après.

Pré-traitement A : Les fibres ont été trempées dans une solution d'une composition de CILBOND 65W, diluée à 2,85 %, commercialisée à 15% d'extrait sec par la société CIL (Compounding Ingredients Limited). Le trempage des fibres a lieu dans une machine classique, présentant une filière et une racle. La vitesse de défilement du fil est de 17,6 m/min. La tension des fibres à l'entrée de l'extrudeuse est de 180 grammes. Après trempage, les fibres sont séchées par exposition à une température de 160°C pendant 30 secondes. On a observé un emport sec de l'ordre de 0,3 %.

Pré-traitement B : Les fibres ont été trempées dans une solution de composition :
97.10 litres d'eau permutée ;
0.11 kg de carbonate de soude commercialisé par la société Verre Labo Mula
0.56 litres de tensio-actif Aerosol OT à 50% commercialisé par la société Cytec ;
2.20 litres de glycidyl éther (époxy) de référence GE 100 commercialisé par la société Raschig GmbH ;
4 kg de methylènediphénylbishexahydroazepincarboxamide (diisocyanate bloqué) de référence Grilbond IL6 à 50% commercialisé par la société EMS-PRIMID.
L'extrait sec de cette solution est d'environ 4.5%.
Le trempage des fibres a lieu dans la même machine que pour le pré-traitement A avec la même vitesse de défilement. Après trempage, les fibres sont séchées par exposition à une température de 180 °C pendant 30 secondes. On a observé un emport sec de l'ordre de 1,5 %.

Pré-traitement C : Les fibres ont été trempées dans une solution de triéthoxy γ-aminosilane de référence AMEO 1100 commercialisé par la société Hüls, à 0,04 % environ. Le trempage des fibres a lieu dans la même machine que pour le pré-traitement A avec la même vitesse de défilement. Après trempage, les fibres sont séchées par exposition à une température de 160°C pendant 30 secondes. On a observé un emport sec de l'ordre de 0,03 %.

### 2/ Etape d'extrusion

Quatre matériaux élastomères thermoplastiques différents ont été employés pour réaliser l'étape d'enduction.

Extrusion A : Le matériau utilisé est un mélange polypropylène/terpolymère d'éthylène; de propylène et d'un diène (EPDM), commercialisé sous la référence SANTOPRENE X8291 - 80TB, par la société Advanced Elastomer Systems (AES). La température de la tête de l'extrudeuse est de l'ordre de 225°C. La température de la filière, par laquelle passe le fil après extrusion est comprise entre 225 et 230°. Différents essais ont été réalisés en faisant varier la pression du matériau élastomère thermoplastique extrudé, et la tension appliquée sur le fil, ainsi que la vitesse de défilement.

Extrusion B : Le matériau utilisé est un polypropylène greffé avec un anhydride maléique à un taux supérieur à 1 %, et conunercialisé sous la référence FUSABOND 353 D, par la société DUPONT. La température de la tête de l'extrudeuse est de l'ordre de 200°C. La température de la filière, par laquelle passe le fil après extrusion est de 205°C. Différents essais ont été réalisés en faisant varier la pression du matériau élastomère thermoplastique extrudé, et la tension appliquée sur le fil, ainsi que la vitesse de défilement.

Extrusion C : Le matériau utilisé est un polypropylène greffé avec un anhydride maléique à un taux compris entre 0.5 et 1%, et commercialisé sous la référence EXXELOR PO 1020, par la société EXXON MOBIL CHEMICAL. La température de la tête de l'extrudeuse est de l'ordre de 200°C. La température de la filière, par laquelle passe le fil après enduction est de 203°C. Différents essais ont été réalisés en faisant varier la pression du matériau élastomère thermoplastique extrudé, et la tension appliquée sur le fil, ainsi que la vitesse de défilement.

Extrusion D : Le matériau utilisé est un polypropylène greffé avec un anhydride maléique à un taux compris entre 0.25 et 0.5%, et commercialisé sous la référence EXXELOR PO 1015, par la société EXXON MOBIL CHEMICAL. La température de la tête de l'extrudeuse est de l'ordre de 190°C. La température de la filière, par laquelle passe le fil après extrusion est de 191°C. Différents essais ont été réalisés en faisant varier la pression du matériau élastomère thermoplastique extrudé, et la tension appliquée sur le fil, ainsi que la vitesse de défilement.

Pour tous ces essais, la filière utilisée pour l'extrusion présente un diamètre de 0,5 mm.

Le tableau ci-après donne pour différents essais réalisés :
- le type de pré-activation réalisé,
- le type d'extrusion réalisé,
- la pression à laquelle est soumis le matériau élastomère thermoplastique dans la machine d'extrusion,
- la tension mesurée sur le fil, en centiNewtons, en amont de la zone d'extrusion, et en aval,
- la vitesse du fil au niveau de la tête d'extrusion, en mètre par minute,
- l'emport, en pourcentage, correspondant à l'étape d'extrusion,
- une appréciation qualitative de la tenue de la gaine obtenue après extrusion,
- une appréciation qualitative de l'aspect du fil ainsi obtenu.

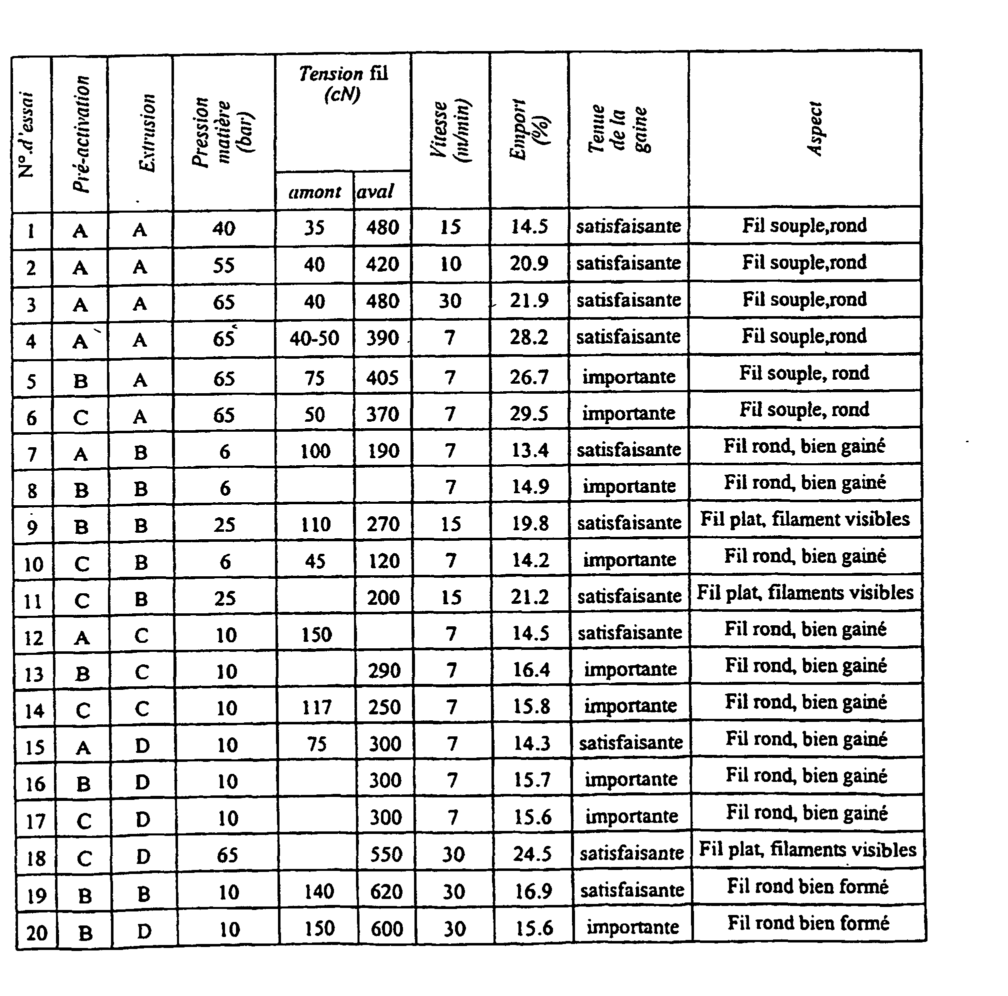

Des mesures complémentaires ont été effectuées pour les deux essais portant les numéros 19 et 20.

Ainsi, le fil obtenu à l'essai numéro 19 présente un allongement à la rupture de 2,48 %, et un allongement, sous charge de 30 %, de 0,75 %. Sa charge de rupture est de 20,08 kg. Son diamètre est de 0,4 mm. L'emport sec est de 16,9 %, et son titre est de 331 tex.

Ainsi, le fil obtenu à l'essai numéro 20 présente un allongement à la rupture de 2,95 %, et un allongement, sous charge de 30 %, de 0,87 %. Sa charge de rupture est de 23,25 kg. Son diamètre est de 0,4 mm. Sa perte au feu de 17 %, et son titre est de 323 tex.

La qualité de l'adhérence du fil de renfort obtenu conformément à l'invention vis à vis du matériau élastomère thermoplastique de l'article à renforcer peut s'évaluer en mesurant l'effort nécessaire pour extraire le fil du matériau élastomère thermoplastique par traction à 23°C.

Les mesures dynamométriques obtenues pour extraire le fil de renfort de l'article en matériau élastomère thermoplastique donnent 60 Newtons pour l'essai n°19, et 75 Newtons pour l'essai n°20. Le même test a été effectué sur un échantillon témoin comprenant un fil standard de même longueur noyé dans une enveloppe en caoutchouc. L'effort nécessaire pour extraire le fil est alors de 45 à 50 Newtons.

Il ressort de ce qui précède que le procédé conformément à l'invention permet d'obtenir des éléments de renforts longitudinaux qui sont compatibles avec leur emploi dans des articles profilés à base d'élastomère thermoplastique. Il est ainsi possible de réaliser de tels articles profilés en alliant à la fois les qualités d'élasticité conférées par les propriétés du matériau élastomère, avec la résistance aux agressions, et la durabilité conférée par le caractère thermoplastique de ce matériau. L'emploi de ces renforts facilite les opérations d'extrusion, et bloque les effets de retrait lors de la baisse de température de ces articles.

## Revendications

1. Procédé de fabrication d'un élément de renfort longitudinal à base de fibres de verre, destiné à être incorporé dans un article profilé à base d'élastomère thermoplastique, **caractérisé en ce qu'**il comporte au moins deux étapes successives, à savoir:
- une étape de pré-activation des fibres de verre, par trempage dans une solution contenant un mélange d'époxydes et de diisocyanates.
- une étape d'extrusion des fibres pré-activées par un matériau thermoplastique, fonctionnalisé par un groupe réactif ayant une réactivité chimique avec les époxydes et/ou les diisocyanates.

2. Procédé selon la revendication 1, **caractérisé en ce que** le matériau thermoplastique utilisé pour l'étape d'extrusion est un élastomère thermoplastique.

3. Procédé selon la revendication 1, **caractérisé en ce que** postérieurement à l'étape de pré-activation, il comporte une étape de séchage des fibres pré-activées.

4. Procédé selon la revendication 1, **caractérisé en ce que** les diisocyanates utilisés lors de l'étape de pré-activation sont des diisocyanates bloqués.

5. Procédé selon la revendication 1, **caractérisé en ce qu'**il comporte, préalablement à l'étape d'extrusion, une étape de déblocage des diisocyanates présents sur les fibres pré-activées.

6. Procédé selon les revendications 3 et 5, **caractérisé en ce que** l'étape de déblocage a lieu simultanément avec l'étape de séchage

7. Procédé selon la revendication 1 ou 2, **caractérisé en ce que** le matériau thermoplastique utilisé pour l'étape d'extrusion est fonctionnalisé par des groupes anhydrides maléiques.

8. Renfort de fibre de verre susceptible d'être obtenu par le procédé selon l'une des revendications 1 à 7.

9. Article profilé à base d'élastomère thermoplastique incorporant un renfort selon la revendication 8.

## Patentansprüche

1. Verfahren zur Herstellung eines auf Glasfasern basierenden Längsverstärkungselements, das dazu bestimmt ist, in einen auf einem thermoplastischen Elastomer basierenden profilierten Gegenstand eingebracht zu werden, **dadurch gekennzeichnet, dass** es mindestens zwei aufeinanderfolgende Schritte aufweist, nämlich:
- einen Schritt der Präaktivierung der Glasfasern durch Eintauchen in eine Lösung, die eine Mischung aus Epoxiden und Diisocyanaten enthält;
- einen Schritt der Extrusion der präaktivierten Fasern mit einem thermoplastischen Material, welches durch eine reaktive Gruppe, die eine chemische Reaktivität mit den Epoxiden oder den Diisocyanaten aufweist, funktionalisiert ist.

2. Verfahren nach Anspruch 1, **dadurch gekennzeichnet, dass** das für den Extrusionsschritt benutzte thermoplastische Material ein thermoplastisches Elastomer ist.

3. Verfahren nach Anspruch 1, **dadurch gekennzeichnet, dass** es nach dem Präaktivierungsschritt einen Schritt der Trocknung der präaktivierten Fasern umfasst.

4. Verfahren nach Anspruch 1, **dadurch gekennzeichnet, dass** die bei dem Präaktivierungsschritt benutzen Diisocyanate blockierte Diisocyanate sind.

5. Verfahren nach Anspruch 1, **dadurch gekennzeichnet, dass** es vor dem Extrusionsschritt einen Deblockierungsschritt der auf den präaktivierten Fasern vorhandenen Diisocyanate umfasst.

6. Verfahren nach den Ansprüchen 3 und 5, **dadurch gekennzeichnet, dass** der Deblockierungsschritt gleichzeitig mit dem Trocknungsschritt erfolgt.

7. Verfahren nach Anspruch 1 oder 2, **dadurch gekennzeichnet, dass** das für den Extrusionsschritt benutzte thermoplastische Material durch Maleinsäureanhydridgruppen funktionalisiert wird.

8. Glasfaser-Verstärkung, die durch das Verfahren nach einem der Ansprüche 1 bis 7 erhalten werden kann.

9. Auf einem thermoplastischen Elastomer basierender profilierter Gegenstand, in den eine Verstärkung nach Anspruch 8 eingebracht ist.

## Claims

1. A method for the manufacture of a longitudinal reinforcing element based on glass fibers, which is intended to be incorporated in a profiled article based on thermoplastic elastomers, **characterized in that** it comprises at least two successive steps, namely:
- a step of preactivation of the glass fibers by immersion in a solution containing a mixture of epoxides and of diisocyanates,
- a step of extrusion of the preactivated fibers by means of a thermoplastic material implemented by a reactive group having chemical reactivity with expoxides and/or the diisocyanates.

2. The method as claimed in claim 1, **characterized in that** the thermoplastic material used for the extrusion step is a thermoplastic elastomer.

3. The method as claimed in claim 1, **characterized in that**, after the preactivation step, it comprises a step of drying of the practivated fibers.

4. The method as claimed in claim 1, **characterized in that** the diisocyanates used during the preactivation step are block diisocyanates.

5. The method as claimed in claim 1, **characterized in that** it comprises, before the extrusion step, a step of unblocking the diisocyanates present on the preactivated fibers.

6. The method as claimed in claims 3 and 5, **characterized in that** the unblocking step takes place simultaneously with the drying step.

7. The method as claimed in claim 1 or 2, **characterized in that** the thermoplastic material used for the extrusion step is implemented by maelic anhydride groups.

8. A glass fiber reinforcement capable of being obtained by means of the method as claimed in one of claims 1 to 7.

9. A profiled article based on thermoplastic elastomer incorporated a reinforcement as claimed in claim 8.
